# EUROPEAN PATENT APPLICATION

(11) **EP 0 934 867 A1**
(43) Date of publication of application: **11.08.1999**
(21) Application number: 99850011.0
(22) Date of filing: 26.01.1999
(51) Int. Cl.: B62D 55/253

(54) **A drive track for tracked vehicles**

(30) Priority: 28.01.1998 SE 9800220
(71) Applicant: Trelleborg Viking AS, 3051 Mjondalen (NO)
(72) Inventor: Mork, John, 3055 Krokstadelva (NO)
(74) Representative: Lundin, Björn-Eric

(57) **Abstract**

The present invention relates to a drive track for tracked vehicles intended primarily for use in all types of terrain, both hilly terrain and in wetlands, and on different types of ground surfaces, such as on asphalt, concrete, gravel, sand, stone, snow and ice. The drive track (10) includes one or more endless traction elements (12) made of a cord-reinforced elastomeric material and cross-ribs (11) which are spaced apart generally equidistantly and extend transversely and outwardly of the traction elements (12), said cross-ribs being intended for contact with the ground as the vehicle moves. The drive track also includes between the cross-ribs (11) openings (13) which are intended for engagement the teeth of the toothed wheels that drive the drive track. The drive track also includes guide elements (16) for support wheels (17). The cross-ribs (11) comprise a support element in the form of a profiled construction (18) which is also closed at its ends, and a polymeric material (19) arranged on the profiled construction (18) and supported thereby. The profiled construction (18) is made of a flexurally rigid composite material that includes a polymer matrix and a fibre reinforcement that extends in the longitudinal direction of the profiled construction throughout. Seen in cross-section, the fibre reinforcement has a predetermined geometry and is entirely encapsulated by the polymeric material (19), with the exception of regions nearest the openings (13). The polymeric material (19) is a material that is compatible with the rubber in the traction element and which has been moulded together with said rubber in the manufacture of the drive track, such that the cross-rib (11) is joined to the traction element (12) in the absence of any mechanical fastener devices.

## Description

The present invention relates to a drive track for tracked vehicles that will allow the vehicle to be driven in all types of terrains, including hilly terrains and wetlands, and on different types of ground surfaces, such as asphalt, concrete, gravel, sand, stone, snow and ice. The inventive drive track includes one or more endless traction elements comprised of cord-reinforced elastomeric material, and cross-ribs which are disposed generally equidistantly from one another transversely to said traction elements and outwardly therefrom, said cross-ribs being intended to contact the ground surface as the tracked vehicle moves through the terrain. The drive track includes between the cross-ribs openings that are intended for engagement with teeth of a track drive wheel, as well as support wheel guide elements. The cross-ribs are comprised of a support element in the form of a profiled structure which is fully closed as seen transversely, and polymeric material disposed on said profiled structure and supported by said support element.

The track is intended primarily for tracked vehicles that have guided rear carriages, although it can also be used with a single track carriage that has two tracks for terrain use.

The vehicle track described in the introduction is known to the art and functions to provide a vehicle with the smoothest possible supportive surface in forward movement of the vehicle, and also to transmit the forward propulsion generated by the engine to the underlying ground surface, via the vehicle drive wheels. The patterned design of the vehicle track enables driving and stability of the vehicle to be ensured, and the track shall also generally dampen the strain to which the vehicle is subjected when driven over bumpy and uneven ground. A vehicle track will usually comprise two endless traction elements (belts) made of natural or synthetic rubber or of a similar polymeric material, and two cross-ribs that are fitted transversely to the traction elements. These cross-ribs and the openings provided therebetween together provide engagement means for the teeth of the toothed drive wheels, while the outwardly facing ribs ensure good contact with the ground surface. The propulsion force generated by the engine of the vehicle is transmitted to the track via a toothed wheel, said track transmitting the propulsion force to the ground surface through the medium of the cross-ribs which make contact with the ground surface at given time intervals. Known vehicle tracks, such as the vehicle track described in SE-338930 for instance, have certain limitations and are not suitable for use in all types of terrain, such universal use being necessary at times, for instance in the case of military vehicles. One of the drawbacks with known, conventional tracks is that they are heavy in relation to the total weight of the vehicle, therewith requiring the use of unnecessarily large and heavy engines in running the vehicle. The relatively large mass of the tracks and the need for powerful engines presents a problem with regard to acceleration of the vehicle, since a substantially larger total mass must be accelerated, or in other words both the drive tracks and the vehicle are difficult to "get going". A common feature of all conventional vehicle tracks of the kind described in the introduction is that the cross-ribs include a supportive device, also called reinforcement, in the form of an open metal profile, e.g. U-file or T-profile which is constructed to retain or hold the polymeric material mechanically on the one hand, i.e. that part of the cross-ribs which comes into contact with the ground, and to provide reinforcement that imparts a predetermined flexural rigidity to the cross-rib in a direction perpendicular to the traction element on the other hand. A cross-rib of conventional vehicle tracks is comprised of a metal bar which may have a U-shape or a T-shape or some other open shape that varies in the longitudinal direction of the bar, and a polymeric bar which is held mechanically by the metal bar, either by being clamped therein or moulded in the polymeric bar. Seen in cross-section, the cross-ribs are thus filled completely with material, either metal or polymeric material, with the. exception of the holes provided for accommodating fastener devices.

GB-A-2152885 teaches another kind of drive track which is comprised of individual sub-elements that can be assembled to form an endless track or belt. The sub-elements are held together by steel, profiled cross-ribs. The whole of a subelement is encapsulated in an elastomeric material.

A drive track according to the preamble of this document and having a greatly reduced mass in comparison with earlier known drive tracks of corresponding dimensions is proposed in our earlier Patent Specification SE-A-9700492-3. As a result of its reduced mass and therewith reduced power requirements, the drive track according to our earlier invention greatly enhances the driver ability of tracked vehicles, such as to enable said vehicles to be driven readily in all types of terrain, including, for instance, hilly terrain and wetlands, without requiring excessively heavy engines to this end.

There has now been expressed from military quarters a desire for drive tracks that are light in weight, have a low rolling resistance, a low sound level, and improved resistance to corrosion when stored and primarily drive tracks that are cheaper than conventional drive tracks. Although our earlier proposed drive track is able to fulfil the majority of these requirements, it is an object of the present invention to fulfil all of the requirements put forward from said military quarters and thus to provide an extremely light, corrosion-resistant, silent and inexpensive drive track which, in parallel herewith, has a simple construction adapted primarily for lighter tracked vehicles, for instance vehicles of the type Hägglunds BV 206. Such a drive track will have a positive influence on the payload, engine load, and service requirements of the tracked vehicles.

These objects are achieved with an inventive drive track having the characteristic features set forth in the following Claims.

The inventive drive track thus includes traction elements with which the elastomeric material is cord-reinforced rubber, as mentioned in the introduction. The profiled construction in the cross-rib is comprised of a flexurally rigid composite material that includes a polymer matrix and fibre reinforcement which has a predetermined geometry as seen transversally and which extends continuously in the longitudinal direction of the profiled construction. The profiled construction is entirely encapsulated by the polymeric material with the exception of the regions nearest the openings that receive the teeth on the drive wheel, said polymeric material being a material that is compatible with the rubber in the traction element and has been moulded together with said rubber in the manufacture of the drive track, so that the cross-rib will be firmly joined to the traction element without requiring mechanical fasteners to this end.

The polymeric material is either a material that can be vulcanised to the rubber in the traction element, in which case it is fastened together with the rubber by vulcanisation, or is a material that is the same as or closely related to the rubber used in said traction element. In those instances when a material that can be vulcanised to the rubber is chosen, a reaction product of the materials will be formed in a zone, referred to as the melt zone, between the two materials in the vulcanisation process, this reaction product effectively bonding the materials together. In those instances when the polymeric material is the same synthetic rubber material as that used in the traction element, or a rubber material that is so closely related to said synthetic rubber as to behave in the same manner in the vulcanisation process, no such reaction product will be formed in said vulcanisation process and, instead, there will be obtained a single coherent unit which consists of the same material throughout.

The flexurally rigid composite material in the profiled construction in the cross-ribs is comprised of a matrix of polyester, epoxy or some other material of similar properties, and includes a reinforcement comprising glass fibres, carbon fibres or some other material of similar properties. Other matrix materials that are particularly suitable in this regard are isophthalic acid or ortophthalic polyester, and vinyl ester. Other suitable reinforcement materials include E-glass in the form of roving and aramide fibre. The matrix may also include an additive or additives instrumental in achieving certain predetermined properties, such as low shrinkage, fire resistance, colour, thermal properties and chemical resistance.

The cord-reinforcement will preferably consist of aramide fibres.

The guide elements are suitably comprised of a polymeric material that is reinforced with an insert comprised of some other material, for instance a plastic material of high mechanical strength or an appropriate lightmetal alloy. The guide elements are suitably moulded with the polymeric material together with the cross-ribs, therewith forming a complete, coherent drive track, although it is also possible within the scope of the invention to fasten the guide elements mechanically when this is considered more suitable in individual cases.

The profiled construction may conveniently comprise an outer wall made of said composite material and surrounding a longitudinally extending space. Alternative, the profiled construction may have the form of a beam comprised of said composite material and having two or more longitudinally extending spaces provided therein. The cross-ribs in the profiled construction are preferably produced by means of a profile drawing process (pultrusion), thereby enabling the predetermined geometry of the fibre reinforcement in the transverse direction to be readily achieved when manufacturing the profiled construction. This means that the composite profile will be produced in several stages, in which the fibre reinforcement, which may comprise different types of roving or threads, is unrolled continuously from bobbins or rolls and passed through a mould tool, a so-called die, wherewith the reinforcement is given said predetermined geometry in a first zone and is impregnated with injected matrix in a second zone, i.e. with polyester or similar material chosen for the composite in question, and the reinforcement package is given the correct dimensions and geometric shape in a third zone and heat hardened to form a finished composite profile.

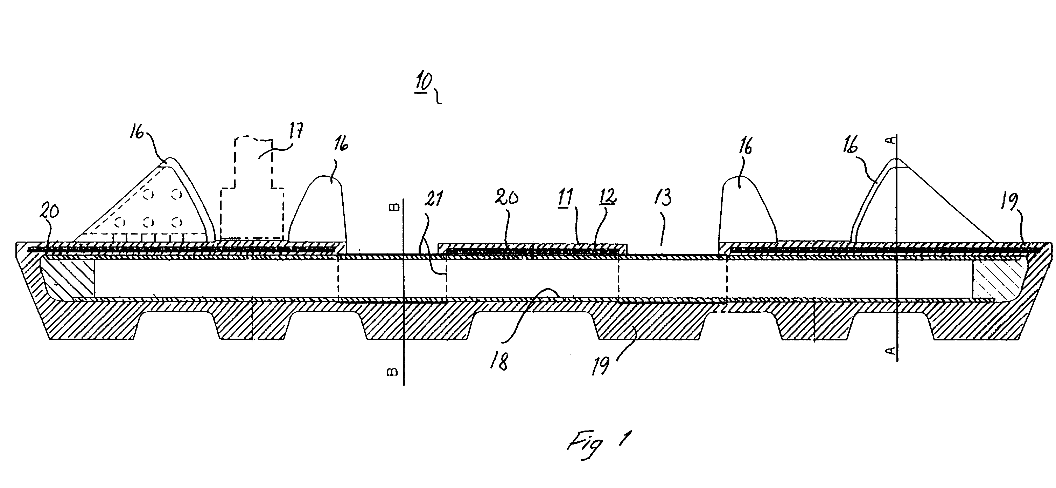

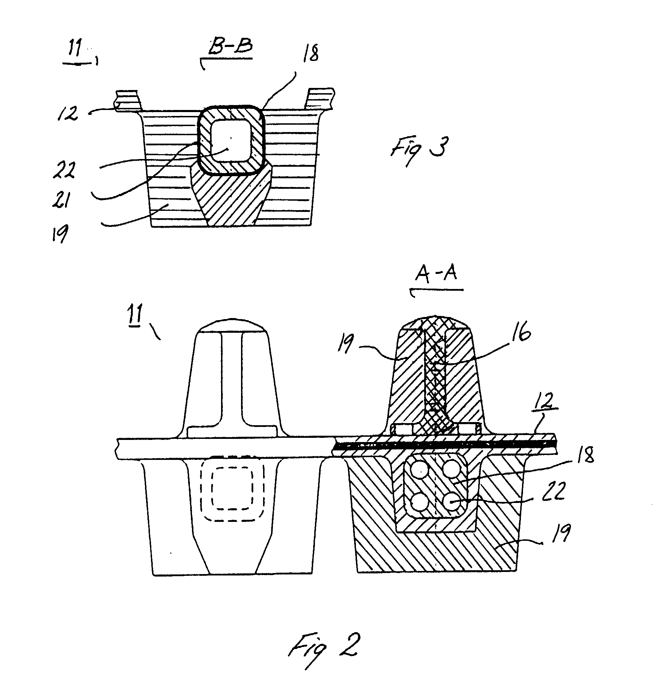

The invention will now be described in more detail with reference to the accompanying drawing, in which Figure 1 is a cross-sectional view of a drive track; Figure 2 is a cross-sectional view of two adjacent cross-ribs of the drive track of Figure 1, of which the right cross-rib is shown taken on the line A-A in Figure 1; and Figure 3 is a sectional view of a cross-rib taken on the line B-B in Figure 1.

Figure 1 illustrates a drive track 10 in a sectional view taken along a cross-rib 11. The drive track 10 includes a traction element 12 in the form of compression moulded endless belt in cord-reinforced rubber, and guide elements 16 for support wheels 17. The cross-rib 11 and, in the illustrated case, also the guide element 16 are joined together with the traction element 12 to form a unit in the absence of any mechanical fastener devices, by moulding said cross-rib and said guide elements together with the polymeric material and associated cord-reinforcement 20 when manufacturing the drive track, or by forming said cross-rib and said guide elements together with the polymeric material and associated cord reinforcement 20 in some other way. The internal, longitudinally extending reinforcement 20 of the drive track traction elements 12 is comprised of several layers of aramide cord dimensioned for a maximum extension of 0.5%.

The cross-ribs 11 are built-up about a closed profiled construction 18 of a flexurally rigid composite material, which conveniently includes a matrix of polyester, epoxy or some similar material, and a reinforcement which extends transversely to said rib and which is comprised of glass fibres, carbon fibres or a material that has comparable properties and which has a predetermined geometry as seen in cross-section of the rib 11. The profiled construction 18 is embraced by a polymeric material 19 which may either be the same material as that from which the traction element 12 is made or an elastomeric material that can be vulcanised to said traction element, as is the case of the illustrated embodiment. The profiled construction 18 is surrounded by the rubber with the exception of regions adjacent openings 13 provided in the traction element 12 between two mutually adjacent cross-ribs 11 for engagement with the wheels that drive the track 10. The cross-rib 11 is conveniently provided at the regions of said openings 13 with a relatively short metal sleeve 21, made preferably of hard stainless steel, arranged on the outside of the profiled construction 18 with the intention of protecting said construction when the teeth of the drive wheel lie against the cross-rib 11 as the vehicle is driven. The ends of the profiled construction 18 are closed suitably with the aid of plugs (not shown) made of a composite material.

Figure 2 is a sectional view of two adjacent cross-ribs 11, the right of them taken on the line A-A in Figure 1. The Figure shows the traction elements 12 of the drive track 10 and said cord reinforcement 20. In the Figure 2 illustration, the closed profiled construction 18 has the form of a moulded, pressed or similarly shaped bar of composite material in which four parallel, longitudinally extending spaces 22 of round cross-section are formed in conjunction with the manufacture of the profiled construction. Shown in broken lines on the left side of Figure 2 is an embodiment of the profiled construction 18 in which said construction encloses only one single longitudinally extending space 22. Figure 2 also shows a preferred form of a guide element 16 encapsulated in rubber 19.

Figure 3 is a sectional view of an alternative profiled construction taken on the line B-B in Figure 1, i.e. in the region of an opening 13 provided in the traction element 12 for engagement with the teeth of the drive wheel. A metal sleeve 21 tightly embraces the aforesaid bars, i.e. the support element 18, and is intended to protect the beam 18 against abutment with the teeth of the drive wheel when the vehicle is driven.

In addition to the aforedescribed advantages with regard to power requirement, etc., the preferred embodiment of an inventive drive track also provides other advantageous features over earlier known drive tracks.
- The weight of a drive track can be reduced from about 200 kg to about 125-130 kg, resulting in a lower rolling resistance and lower vehicle operating costs.
- The track can be produced more cheaply than a conventional track.
- Driving comfort is improved, by virtue of the drive track behaving in a "gentler" fashion when the vehicle is driven, this being made possible because the fibre-reinforced composite material has greater resiliency than steel.
- Wear will probably be greatly reduced.
- Improved resistance to corrosion because the drive track contains no metallic parts, thereby improving resistance to corrosion in storage. The steel components of tracks used at present quickly corrode, and since the tracks may be held in store over very long periods, e.g. periods of from 5-10 years, the tracks are subjected to corrosion damage that may necessitate replacement of the tracks earlier than was anticipated, in the worst case.
- A complete drive track that is comprised of polymeric/composite material will have a storage resistance that exceeds the normal life of the tracked vehicle.
- The novel track provides a complete "non-metallic" solution, in which all component materials, such as aramide fibre cord, composite ribs for supporting and propelling the vehicle, and reinforcement material in guide ribs, can be vulcanised to an endless belt in polymeric material in one and the same operation.

## Claims

1. A drive track intended for tracked vehicles that are driven in all types of terrain, both hilly and wet terrains, and on different types of surfaces, such as on asphalt, concrete, gravel, sand, stone, snow and ice, said drive track (10) having one or more endless traction elements (12) comprised of a cord-reinforced elastomeric material and cross-ribs (11) that are spaced generally equidistantly from each other transversely to the traction elements (12), and disposed outwardly of said traction elements and intended for contact with the terrain as the tracked vehicle is driven, openings (13) provided between said cross-ribs (11) and adapted for engagement by the teeth of toothed wheels driving the drive track, and guide elements (16) for guide wheels (17), wherein the cross-ribs (11) are comprised of a support element in the form of a profiled construction (18) that is fully closed when seen transversely, and a polymeric material (19) arranged outside said profiled construction (18) and supported by said profiled construction (18), **characterised** in that the profiled construction (18) is comprised of a flexurally rigid composite material having a polymer matrix and a fibre reinforcement which extends throughout the longitudinal direction of the profiled construction, wherein said fibre reinforcement has a predetermined geometry in its transverse direction and is entirely encapsulated by the polymeric material (19) with the exception of the regions close to said openings (13), said polymeric material being a material which is compatible with the rubber in the traction element and which has been moulded together with said rubber in the manufacture of the drive track so as to join said cross-rib firmly to the traction element (12) in the absence of any mechanical fastener devices.

2. A drive track according to Claim 1, **characterised** in that the polymeric material is a material that can be vulcanised to the rubber in the traction element; and in that said material has been moulded together with the rubber by vulcanisation.

3. A drive track according to Claim 1, **characterised** in that the polymeric material is the same as the rubber in the traction element or is related to said rubber.

4. A drive track according to Claims 1-3, **characterised** in that the flexurally rigid composite material in the profiled construction (18) in the cross-ribs (11) is comprised of polyester, epoxy or a material having similar properties, and is reinforced with glass fibre, carbon fibre or some other material having similar properties.

5. A drive track according to Claims 1-4, **characterised** in that the cord reinforcement (20) is comprised of aramide fibres.

6. A drive track according to Claims 1-5, **characterised** in that the guide elements (16) are comprised of a polymeric material that has been reinforced with an insert of some other material having high mechanical strength.

7. A drive track according to Claim 6, **characterised** in guide elements (16) are moulded with the polymeric material together with the cross-ribs (11), therewith to form a complete drive track.

8. A drive track according to Claims 1-7, **characterised** in that the profiled construction (18) is comprised of an outer wall of composite material that encloses a longitudinally extending space (22).

9. A drive track according to Claims 1-8, **characterised** in that the profiled construction (18) is comprised of a bar of composite material having two or more longitudinally extending spaces (22) provided therein.

10. A drive track according to Claims 1-9, **characterised** in that the cross-ribs (11) are produced by profile drawing (pultrusion).
